# EUROPÄISCHE PATENTANMELDUNG

(11) **EP 1 185 049 A1**
(43) Veröffentlichungstag der Anmeldung: **06.03.2002**
(21) Anmeldenummer: 00118893.7
(22) Anmeldetag: 31.08.2000
(51) Int. Cl.: H04L 29/06, H04Q 3/00

(54) **Verfahren zur Sicherung eines Internet Supplementary Service**

(71) Anmelder: SIEMENS AKTIENGESELLSCHAFT, 80333 München (DE)
(72) Erfinder: Mitreuter, Ulrich, Dr., 82547 Eurasburg (DE); Zygan-Maus, Renate, Dr., 81477 München (DE)

(57) **Zusammenfassung**

Die Erfindung beschreibt ein Verfahren zur Verbesserung der Sicherung eines Internet Supplementary Service. Beim Zutritt einer ISS-Nachricht vom Internet zum IP-Servernetz des Netzwerkoperators wird durch einen speziellen Sicherheits-Server eine dienstunabhängige Authorisierung vorgenommen, für die eine dienstunabhängige Kennung verwendet wird. Danach wird von einem Dienstezugangsserver eine dienstbezogene Authorisierung vorgenommen, für die ein Nutzer-Passwort verwendet wird.

## Beschreibung

1.Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?

### Zu Punkt 1: Welches technische Problem soll durch Ihre Erfindung gelöst werden?

Für die Realisierung von Internet Supplementary Services (z.B. Call Waiting Internet Busy, Subscriber Controlled Input via Internet) benötigt man Nachrichten (im folgenden als Dienstnachrichten bezeichnet), die über das öffentliche Internet zwischen Internetnutzern und PSTN/ISDN Vermittlungsstellen ausgetauscht werden. Dadurch entstehen die folgenden Sicherheitsanforderungen:
a) die Ressourcen des Netzwerkes eines Telekommunikationsoperators (PSTN/ISDN Netzwerk, internes Servernetz) müssen vor unberechtigtem Zugriff (Zugriff durch Internetnutzer, die keine Kunden des Telekommunikatiosoperators sind) geschützt werden
b) der Absender der Dienstnachrichten muß authentifiziert und die Unverfälschtheit der Dienstenachrichten muß verifiziert werden
c) der Zugriff des Nutzers auf den Dienst muß authorisiert werden

### Zu Punkt 2: Wie wurde dieses Problem bisher gelöst?

Standardverfahren für die Sicherung von Signalisierungsnachrichten für Internet Supplementary Services gibt es bisher nicht. Abhängig vom Dienst werden bisher unterschiedliche Kombinationen von IP-Sicherungsverfahren eingesetzt. In vielen Fällen wird ein gemeinsames Geheimnis (z.B. ein Paßwort, eine PIN) mit Standardverfahren verschlüsselt (z.B. "Transport Layer Security", RFC 2246) zu dem Server übertragen, der als Gateway ins PSTN/ISDN den Dienst unterstützt. An diesem Server wird das Paßwort bewertet, basierend auf Schnittstellen zu entsprechenden Dienst-bezogenen Datenbasen des PSTN/ISDN Netzbetreibers, die entweder netzzentrale Datenbasen sein können (am Gatewayserver oder separat) oder Datenbasen, die sich verteilt im Netz in den Teilnehmervermittlungsstellen befinden. Mit solchen Verfahren können die Anforderungen b) und c) erfüllt werden, nicht jedoch gleichzeitig die Anforderung a).

### Zu Punkt 3: In welcher Weise löst Ihre Erfindung das angegebene technische Problem (geben Sie Vorteile an)?

Das Sicherungsverfahren für Dienstenachrichten von Internet Supplementary Services Nutzern wird in zwei Teilschritte zerlegt. Beim Zutritt vom Internet zum IP-Servernetz des Netzwerkoperators wird durch einen speziellen Sicherheits-Server (Firewall-Server) eine generische, d.h. dienstunabhängige Authorisierung vorgenommen, für die eine dienstunabhängige Kennung, z.B. die Kundennummer, verwendet wird. Danach wird von einem Dienstezugangsserver eine dienstbezogene Authorisierung vorgenommen, für die ein dienstbezogenes (dienstspezifisches) Geheimnis (z.B. ein Nutzer-Passwort, eine PIN) verwendet wird. Weder Kundennummer noch dienstbezogenes Geheimnis werden über das Internet übertragen (wird später näher erläutert). Eine Teilnehmerkennung des ISS Subscribers, z.B die Rufnummer, wird in der Dienstnachricht im Klartext (Plaintext) über das Internet übertragen und dient dem Empfänger (Sicherheits-Server bzw. Dienstezugangsserver) zur Ermittlung des zugehörigen gemeinsamen Geheimnisses (dienstunabhängige Kennung bzw. dienstbezogenes Geheimnis), anhand dessen er die jeweilige Authorisierung prüfen kann. Sicherheits-Server und Dienstezugangsserver können insbesondere auch auf einer Hardware-Plattform realisiert sein.

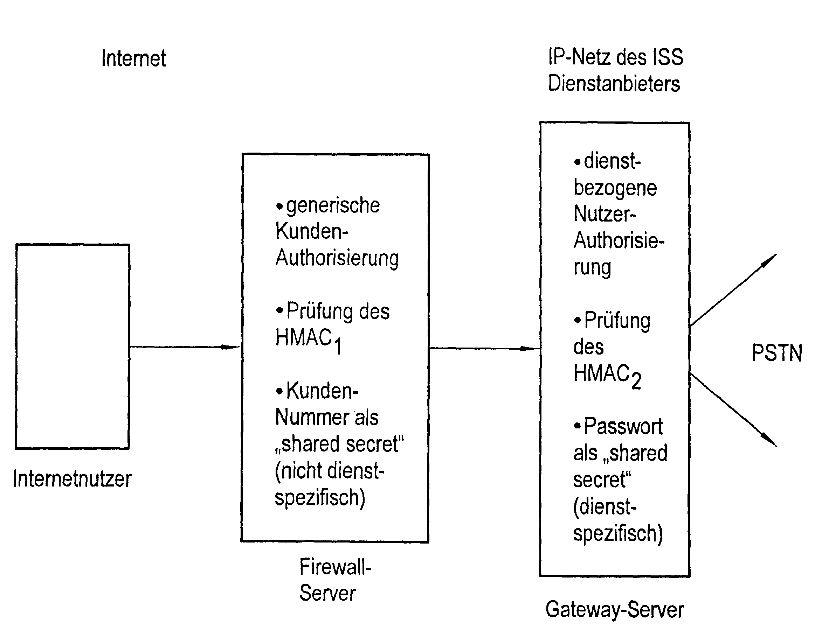

Im folgenden wird die Erfindung (siehe dazu auch die Figur) näher erläutert.

Eine dienstunabhängige Kennung, z.B. die Kundennummer des Subscribers, dient als gemeinsames Geheimnis (shared secret) zur Bildung einer kryptographischen Prüfsumme, z.B. nach dem Standardverfahren (RFC 2104) des "Hashed Message Authentication Code (kurz HMAC)", die als sogenannte "digitale Unterschrift" an die Dienstnachricht angehängt wird. Ein generischer Sicherheitsserver (Firewall-Server) bewertet die HMAC-Prüfsumme der empfangenen Dienstnachricht, basierend auf Schnittstellen zu den Datenbasen des PSTN/ISDN Netzbetreibers für Kundennummern und Rufnummern. Bei erfolgreicher HMAC-Prüfung (damit wird die Kunden-Authentifizierung und Datenintegrität gesichert) erhält der Subscriber Zutritt zum Servernetz des Operators.

Seine Nachricht wird zum zuständigen Dienstezugangsserver, der den Zugang zu einem Internet Supplementary Service ermöglicht, geroutet und hier erfolgt die dienstspezifische Authorisierung (Bei dem Dienstezugangsserver kann es sich insbesondere um einen Gateway-Server (siehe Figur) handeln, der den Zugang zu einem von einem anderen Netzes angebotenen Internet Supplementary Service ermöglicht). Dazu wertet der Dienstezugangsserver einen zweiten "Hashed Message Authentication Code" aus, der von der IP-Applikation des Nutzers mithilfe eines dienstbezogenen Geheimnisses gebildet worden ist. Der Dienstezugangsserver bewertet den HMAC basierend auf Schnittstellen zu den Dienst-bezogenen Datenbasen des PSTN/ISDN Netzbetreibers, die die dienstbezogenen Geheimnisse der Dienstteilnehmer enthalten. Dies können entweder netzzentrale Datenbasen sein (am Gatewayserver oder separat) oder auch Datenbasen, die sich verteilt im Netz in den Teilnehmervermittlungsstellen befinden.

### Kurze Erläuterung der Funktionsweise des HMAC :

Der Absender hängt an die Dienstnachricht vor dem Absenden das gemeinsame Geheimnis (hier z.B. Kundennummer oder Nutzer-Passwort) an und bildet über beides eine Prüfsumme. Dann wird die Kundennummer oder das Passwort entfernt, die Prüfsumme an die Dienstnachricht angehängt und die Nachricht versendet. Der Empfänger entfernt die Prüfsumme, hängt die Kundennummer oder das Passwort (aus seiner Datenbank entnommen) an die Dienstnachricht an und berechnet ebenfalls die Prüfsumme. Ein erfolgreicher Vergleich der empfangenen mit der berechneten Prüfsumme beweist erstens, daß der Absender die Kundennummer oder das Passwort kennt und zweitens, daß die Nachricht bei der Übertragung nicht verändert wurde (das hätte die Prüfsumme verändert). Kundennummer oder Passwort werden also weder im Klartext noch verschlüsselt übertragen. Stattdessen beweist der Absender, daß er das richtige Passwort kennt.

### Vorteile der Erfindung:

- Durch das beschriebene zweistufige Verfahren wird es möglich, die Anforderungen a),b) und c) zu erfüllen und gleichzeitig vorhandene Passwort-Datenbasen in den Vermittlungsstellen und vorhandene Netzbetriebsdatenbasen zu nutzen. Dadurch spart man die Installation und Administration zusätzlicher externer Datenbanken und die eventuelle Dopplung von sicherheitsrelevanten Daten (z.B. in den Vermittlungsstellen und auf einem externen Server)
- Der ISS Subscriber muß sich durch die Möglichkeit der Wiederverwendung bereits existierender Paßwörter oder PIN's kein zusätzliches Paßwort für Internet Supplementary Services merken.
- Vermittlungsstellen-interne Datenbanken sind von außen nicht zugänglich und damit generisch sicherer als Datenbanken auf Servern.
- Durch die zweistufige Authentifizierung werden Angreifern zusätzliche Hürden in den Weg gelegt.
- Die Kosten einer solchen zweistufigen Authorisierung sind durch die Wiederverwendung bereits existierender Datenbanken deutlich geringer als ähnlich sichere Sicherungsverfahren, die die vollständige Subscriber-Authentifizierung bereits im Sicherheits-Server am Eingang zum IP Servernetz vornehmen.

Zusammenfassend kann gesagt werden, daß die Erfindung ein einfaches zweistufiges Sicherungsverfahren beschreibt, das existierende Daten (Kundennummer, Rufnummer) und Sicherungsverfahren für Telekommunikationsnetze (Rufnummernbezogene PIN) mit existierenden Internet-Sicherungsverfahren (HMAC) verknüpft.

## Patentansprüche

1. Verfahren zur Sicherung eines Internet Supplementary Service, demgemäß
- bei Zutritt einer Internet Supplementary Service Nachricht vom Internet zu einem IP-Servernetz eines Netzwerkoperators in einem Sicherheits-Server eine dienstunabhängige Authorisierung vorgenommen wird, für die eine dienstunabhängige Kennung verwendet wird,
- nach einer positiven dienstunabhängigen Authorisierung in einem Dienstezugangsserver, der den Zugang zu einem Internet Supplementary Service ermöglicht, eine dienstbezogene Authorisierung vorgenommen wird, für die ein dienstbezogenes Geheimnis verwendet wird.

2. Verfahren nach Anspruch 1,
**dadurch gekennzeichnet, daß**
die im Rahmen der dienstunabhängigen bzw dienstbezogenen Authorisierung notwendige Identifizierung des Teilnehmers anhand einer in der Internet Supplementary Service Nachricht enthaltenen Teilnehmerkennung durchgeführt wird.

3. Verfahren nach Anspruch 1 oder 2,
**dadurch gekennzeichnet, daß**
die Internet Supplementary Service Nachricht für den Zutritt vom Internet zu einem IP-Servernetz eines Netzwerkoperators mit einer digitalen Unterschrift versehen wird.
